# EUROPEAN PATENT SPECIFICATION

(11) **EP 1 408 263 B1**
(45) Date of publication and mention of the grant of the patent: **04.01.2006**
(21) Application number: 03022868.8
(22) Date of filing: 08.10.2003
(51) Int. Cl.: F16K 1/22, F02D 9/10

(54) **Throttle valve with noise reduction device**
Drosselklappe mit Geräuschverminderungsvorrichtung
Vanne à papillon avec dispositif de réduction du bruit

(30) Priority: 09.10.2002 JP 2002296633
(43) Date of publication of application: 14.04.2004
(73) Proprietor: AISAN KOGYO KABUSHIKI KAISHA, Obu-shi Aichi-ken (JP)
(72) Inventor: Kawai, Shinji, Aisan Kogyo K. K., Obu-shi Aichi-ken (JP); Kino, Hisashi, Aisan Kogyo K. K., Obu-shi Aichi-ken (JP); Nishimura, Kazuhiko, Aisan Kogyo K. K., Obu-shi Aichi-ken (JP)
(74) Representative: Kramer - Barske - Schmidtchen

(56) References cited:
- FR-A- 2 829 184
- US-A- 3 960 177
- PATENT ABSTRACTS OF JAPAN vol. 1999, no. 09, 30 July 1999 (1999-07-30) & JP 11 101350 A (TOMOE TECH RES CO), 13 April 1999 (1999-04-13)
- PATENT ABSTRACTS OF JAPAN vol. 1999, no. 05, 31 May 1999 (1999-05-31) & JP 11 037307 A (TOMOE GIJUTSU KENKYUSHO:KK), 12 February 1999 (1999-02-12)
- PATENT ABSTRACTS OF JAPAN vol. 2000, no. 16, 8 May 2001 (2001-05-08) & JP 2001 020761 A (AISAN IND CO LTD), 23 January 2001 (2001-01-23)

## Description

The present invention relates to a throttle control device having a throttle valve for controlling a flow rate of fluid, and particularly relates to a throttle control device for controlling a flow rate of air, for example, intake air supplied to an automotive engine.

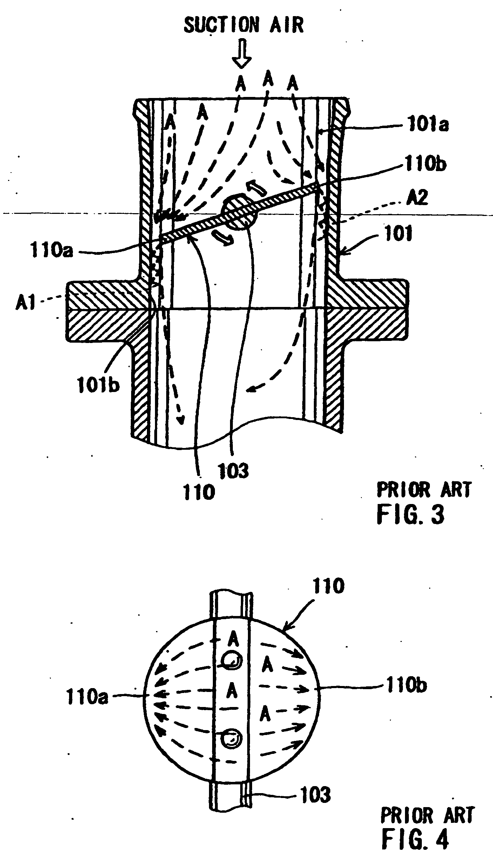

Referring to Figs.3 and 4, a conventional throttle control device for controlling an amount of intake air for an automotive engine generally has a throttle body 101 forming an approximately cylindrical intake passage 101a. A throttle shaft 103 is installed rotatively within the throttle body 101 across the intake passage 101a. A butterfly type of throttle valve 110 is fixed to the throttle shaft 103 (see Fig.4). The throttle valve 110 is rotated via the throttle shaft 103 by a driving unit (not shown), such as an electric motor, so that the intake passage 101a is incrementally opened and closed. As a result, the amount of the intake air flowing through the intake passage 101 a is controlled or adjusted.

In the throttle control device, the flow of the intake air (hereinafter referred to as intake-air-stream) caused by the throttle valve 110 being suddenly opened from a nearly fully closed position is similar to the pathways shown by dotted lines A in Figs.3 and 4. When the throttle shaft 103 rotates counterclockwise as shown by arrows in Fig.3, the intake-air-stream is concentrated at a part of an upstream side surface (top surface as viewed in Fig.3) of a first end 110a of the throttle valve 110, located on the downstream side of the throttle shaft 103 (the left side as viewed in Figs. 3 & 4). The concentrated intake-air-stream becomes a jet stream A1, colliding with a wall surface 101b of the intake passage 101a and resulting in unwanted noise emission. The intake-air-stream does not naturally concentrate on the upstream side surface (top surface as viewed in Fig.3) of a second end 110b (the right side as viewed in Figs. 3 & 4) of the throttle valve 110 as compared with the upstream side surface of the first end 110a. Therefore, speed of a jet stream A2 produced at the second end 110b due to the intake-air-stream is low. Consequently, noise (referred to as intake-noise) caused by the collision of the jet stream A2 with the wall surface 101b is considered almost negligible. At a downstream side (towards the lower half of Fig.3) of the throttle valve 110, the intake-air-stream is also not naturally concentrated, similar to the part of the upstream side surface of the second end 110b. The result is that the noise caused by the downstream side air is almost negligible.

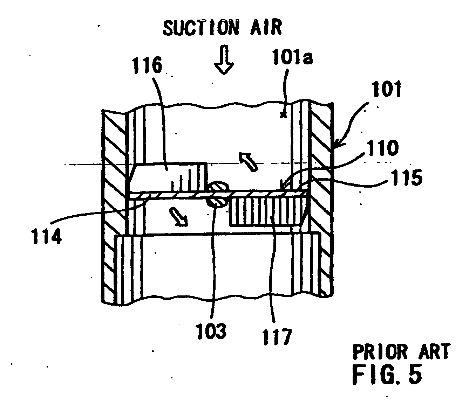

In order to lower the intake-noise level, there has been proposed, as shown in Fig.5 for example, to attach rectifying fins 116 and 117 in order to divide the intake-air-stream on both the upstream side surface (top surface as viewed in Fig.5) of the downstream half of a valve 114 of the throttle valve 110 and the downstream side surface (bottom surface as viewed in Fig.5) of an upstream half of a valve 115 (for example, description on page 9 and Fig.16 in Japanese Laid-Open Patent Publication No. 10-121994).

From results of various experiments, the applicant has observed the noise reduction effects of the rectifying fins 116 provided on the upstream side surface of the downstream valve half 114 of the throttle valve 110. However, the noise reduction effects of the rectifying fins 117 provided on the downstream side of the upstream valve half 115 were not as significant. Furthermore, the rectifying fins 117 were shown to increase intake resistance, directly leading to a decrease in intake efficiency. In the situation where rectifying fins are provided on the upstream side surface of the upstream valve half 115 and rectifying fins are provided on a downstream side surface of the downstream valve half 114, the ability to reduce intake-noise was negligible and the intake efficiency was lowered.

Therefore, an object of the invention is to provide a throttle control device in which the intake-noise emitted is reduced when the throttle valve is suddenly opened from a fully closed position, without a significant decrease in the overall intake efficiency.
A solution of this object is achieved with a throttle control device according to appended claim 1.
Appended subclaims are directed towards advantageous embodiments of the inventive throttle control device.
According to the invention, the energy relaxation device reduces the noise emission caused by the intake-air-stream when the throttle valve is opened from the fully closed position. Since the relaxation device is not applied to any other valve half, the decrease in intake efficiency caused by increase of the intake resistance due to the relaxation devices can be avoided. Therefore, the decrease in intake efficiency can be avoided while the intake-noise can be reduced.

The energy relaxation device is preferably a rectifying device having multiple fins. According to such constitution, the intake-air-stream is divided into a multiple number of stream by the fins, thereby energy of the intake-air-stream can be effectively relaxed.

The fins are preferably formed integrally with the throttle valve. In this case, it is advantageous that the fins and the throttle valve are integrally formed from resin. Thus, the number of parts and the number of assembly steps can be reduced compared with a case that separate fins are assembled to the throttle valve. In addition, weight saving can be achieved compared with a metal throttle valve and/or metal fins.

In one embodiment, the fins extend in a direction substantially perpendicular to an axis of the throttle shaft, and are arranged substantially parallel to each other so as to be spaced from each other by a predetermined distance.

It is preferable that each of the rectifying fins has an outer edge defined by a projecting edge, a distal edge and a transient edge. The projecting edge may have a linear shape extending substantially parallel to a surface of the valve half. The distal edge may have a circular shape about the axis of the throttle shaft and continues with a circumferential edge of the valve half. The projecting edge may gently continue with the distal edge through the curved transient edge.

Additional objects, features and advantages of the present invention will be readily understood after reading the following detailed description together with the claims and the accompanying drawings, in which:
Fig.1 is a cross sectional view of a throttle control device according to an embodiment of the invention,
Fig.2 is a view of a throttle valve of the throttle control device in Fig.1, viewing from an upstream side,
Fig.3 is a cross sectional view of a conventional throttle control device,
Fig.4 is a view of a throttle valve of the throttle control device shown in Fig.3, as viewed from an upstream side, and
Fig.5 is a cross sectional view of another conventional throttle control device.

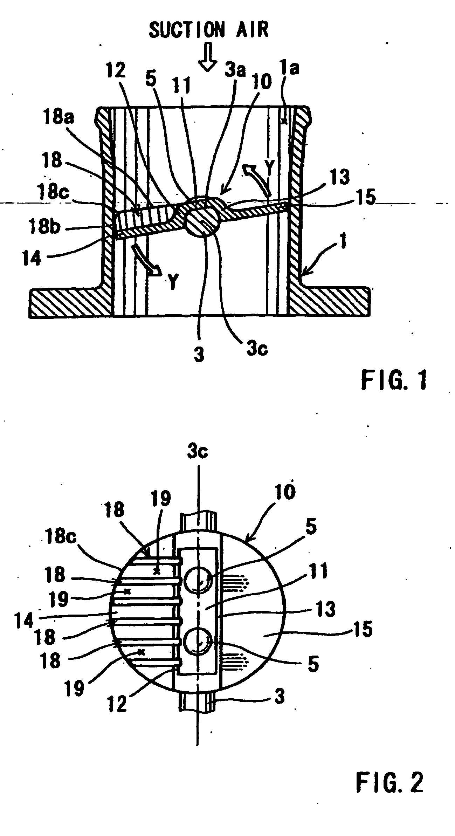

Next, a throttle control device according to an embodiment of the present invention will described with reference to Figs.1 and 2. The throttle control device shown in Fig.1 has a throttle body 1 made of resin, such as PPS resin. The throttle body 1 forms a substantially cylindrical intake passage la that extends vertically as viewed in Fig.1 through the throttle body 1. An air cleaner (not shown) is connected to an upper portion of the throttle body 1, and an intake manifold (not shown) is connected to a lower portion of the throttle body 1.

A metal throttle shaft 3 extends radially (in a direction of thickness of the sheet of Fig.1) across the intake passage la and is rotatavely supported by the throttle body 1. A throttle valve 10 made of resin, such as PPS resin, is fixed to the throttle shaft 3 by two rivets 5 (see Fig.2). The throttle valve 10, which is a butterfly type one, opens and closes the intake passage la as it rotates. Therefore, an amount of the intake air flowing through the intake passage 1a (see Fig.1) can be controlled. The throttle valve 10, whose fully closed position is shown in Fig.1, is opened as it rotates in a counterclockwise direction indicated by arrows Y in Fig.1 from the fully closed position. The throttle valve 10 is rotatively driven by a driving unit (not shown) via the throttle shaft 3.

The throttle shaft 3 as a whole is formed in a substantially round-bar shape as shown in Fig.1. The throttle shaft 3 is formed such that only a portion to which the throttle valve 10 is attached has a D-shaped cross section to define a flat attaching surface 3a.

On the other hand, the throttle valve 10 has an attaching plate portion 11, a pair of fitting walls 12 and 13, and a pair of valve halves 14 and 15. The throttle valve 10 is formed in a substantially circular disc shape as a whole as shown in Figs. 1 and 2. The attaching plate portion 11 is formed in a shape of a plate that is in surface-to-surface contact with the attaching surface 3a of the throttle shaft 3 (see Fig.1). The fitting walls 12 and 13 are located at both ends of the attaching plate portion 11, and form a slot, which fits with the throttle shaft 3, together with the attaching plate portion 11 (see Fig.1). The valve halves 14 and 15 extend outward like wings from outer edges of respective fitting walls 12 and 13. Each of the valve halves 14 and 15 is has a substantially semicircular configuration. The valve halves 14 and 15 extend within a single plane including an axis 3c of the throttle shaft 3. The throttle valve 10 is assembled to the throttle shaft 3 in a following manner. First, the throttle shaft 3 is fitted with the slot defined between the fitting walls 12, 13 of the throttle valve 10, and then the attaching surface 3a of the throttle shaft 3 is made to be in surface-to-surface contact with the attaching plate portion 11. Then, the attaching plate portion 11 is fixed to the throttle shaft 3 by the rivets 5.

As shown in Figs.1 and 2, the valve half 14 of the throttle valve 10 is adapted to move toward the downstream side of the throttle shaft 3 when the valve 10 is opened. A multiple number (in the embodiment, six) of rectifying fins 18 are molded integrally with an upstream side surface (upper surface as viewed in Fig. 1) of the valve half 14 facing the intake-air-stream. The rectifying fins 18 act to divide the intake-air-stream. As shown in Fig.2, the rectifying fins 18 extend perpendicularly to the axis 3c of the throttle shaft 3 from the valve half 14, and are arranged parallel to each other so as to be spaced from each other by a predetermined distance in an axial direction of the throttle shaft 3. As a result, a rectifying groove 19 is defined between each two adjacent rectifying-fins 18.

As shown in Fig.1, each of the rectifying fins 18 has an outer edge defined by a projecting edge 18a, a distal edge 18b, and a transient edge 18c. The projecting edge 18a is in a linear shape that gently continues with a top of the attaching plate portion 11 for the throttle valve 10. Height of the projecting edge 18a gradually increases toward the distal edge 18b that is positioned farther from the axis 3c of the throttle shaft 3. Furthermore, the distal edge 18b has a circular configuration having a radius about the axis 3c of the throttle shaft 3 and continues with a circumferential edge of the valve half 14. The transient edge 18c, which gently connects the projecting edge 18a with the distal edge 18b, is curved in a circular configuration.

According to the throttle control device of this embodiment, the rectifying fins 18 are provided only on the upstream side surface (upper surface as viewed in Fig.1) of the valve half 14 that is adapted to move toward the downstream side of the throttle shaft 3 as the throttle valve 10 is opened. The upstream side of the valve half 14 is the side where the emission of the intake-noise is critical when the throttle valve 10 is suddenly opened. However, because the intake-air-stream along the upstream side surface of the valve half 14 is divided by the rectifying fins 18, the intake air energy is relaxed. As a result, the emission of the intake-noise is effectively reduced. No rectifying fins are provided on the upstream side surface (upper surface as viewed in Fig.1) of the valve half 15 that is adapted to move toward the upstream side of the throttle shaft 3 as the throttle valve 10 is opened. In addition no rectifying fins are provided on the downstream side surface(lower surface as viewed in Fig.1) of either the valve halves 14 and 15, where a problem of emission of the intake-noise is not critical. Therefore, increase of the intake resistance occurred when the rectifying fins are provided on these sides and accompanying decrease in intake efficiency are avoided. Accordingly, the decrease in intake efficiency can be avoided while the intake-noise emitted when the throttle valve 10 is suddenly opened from the fully closed position is reduced.

Since the throttle valve 10 is formed integrally with the rectifying fins 18 by a resin molding process, number of parts and number of assembly steps can be reduced compared with a case that separate rectifying fins are assembled to the throttle valve 10. Weight saving can be also achieved compared with a metal throttle valve and/or metal rectifying fins.

The invention is not limited to the above embodiment, and various modifications or alterations of the embodiment are also possible For example, although the throttle valve 10 is preferably made of resin, it may be made of metal such as aluminum. Although it is also desirable that the rectifying fins 18 are integrally molded with the throttle valve 10, fins that are formed separately from the throttle valve 10 may be fixed to the throttle valve 10 using an appropriate fixation technique such as screwing and adhesion. In this case, material for the throttle valve 10 may be different from that for the rectifying fins 18. Further, the throttle valve 10 may be opened and closed by a manual operation instead of the operation by the driving unit, such as an electric motor.

## Claims

1. A throttle control device comprising,
a throttle body (1) defining an intake passage (1a)
a throttle shaft (3) rotatably supported by the throttle body and extending across the intake passage,
a throttle valve (10) attached to the throttle shaft and disposed within the intake passage, so that the throttle valve opens and closes the intake passage as the throttle shaft rotates, wherein the throttle valve has a downstream valve half (14) and an upstream valve half (15) adapted to move toward a downstream side and an upstream side of the throttle shaft, respectively, as the throttle valve rotates from a fully closed position in an opening direction, and
an energy relaxation device (18) provided on a surface of the throttle valve (10) to relax energy of an intake-air-stream by dividing it into a multiple number of streams,
**characterized in that**
the energy relaxation device (18) is provided only on an upstream side surface of the downstream valve half (14).

2. A throttle control device according to claim 1, wherein the energy relaxation device comprises a rectifying device that includes a plurality of fins (18).

3. A throttle control device according to claim 2, wherein the fins (18) are formed integrally with the throttle valve (10).

4. A throttle control device according to claim 3, wherein the fins (18) and the throttle valve (10) are integrally formed from resin.

5. A throttle control device according to any one of claims 2 to 4, wherein the fins (18) extend in a direction substantially perpendicular to an axis of the throttle shaft (3), and are arranged substantially parallel to each other so as to be spaced from each other by a predetermined distance.

6. A throttle control device according to claim 5, wherein each of the rectifying fins (18) has an outer edge defined by a projecting edge (18a), a distal edge (18b), and a transient edge (18c), the projecting edge has a linear shape extending substantially parallel to the upstream side surface of the downstream valve half (14), the distal edge (18b) has a circular shape having a radius about an axis (3c) of the throttle shaft (3) and continues with a circumferential edge of the valve half (14), and the transient edge (18c) has a curved shape and gradually connects the projecting edge with the distal edge.

## Patentansprüche

1. Drosselsteuervornchtung, enthaltend
ein Drosselgehäuse (1), das einen Einlasskanal (1a) definiert,
eine Drosselwelle (3), die von dem Drosselgehäuse drehbar gehalten ist und sich quer durch den Einlasskanal erstreckt,
eine Drosselklappe (10), die an der Drosselwelle befestigt ist und innerhalb des Einlasskanals angeordnet ist, so dass die Drosselklappe bei Drehung der Drosselwelle den Einlasskanal öffnet und schließt, wobei die Drosselklappe eine strömungsabwärtige Hälfte (14) und eine strömungsaufwärtige Hälfte (15) aufweist, die geeignet sind, sich in Richtung einer strömungsabwärtigen Seite bzw. einer strömungsaufwärtigen Seite der Drosselwelle zu bewegen, wenn die Drosselklappe aus einer voll geschlossenen Stellung in eine Öffnungsrichtung dreht, und
eine Energieausgleichsvorrichtung (18), die auf einer Oberfläche der Drosselklappe (10) vorgesehen ist, um Energie einer Einlassluftströmung durch Unterteilen in eine Vielzahl von Strömungen auszugleichen,
**dadurch gekennzeichnet, dass**
die Energieausgleichsvorrichtung (18) nur auf einer strömungsaufwärtsseitigen Oberfläche der strömungsabwärtigen Drosselklappenhälfte (14) vorgesehen ist.

2. Drosselsteuervorrichtung nach Anspruch 1, wobei die Energieausgleichsvorrichtung eine gleichrichtende Vorrichtung enthält, die eine Vielzahl von Flossen (18) enthält.

3. Drosselsteuervorrichtung nach Anspruch 2, wobei die Flossen (18) integral mit der Drosselklappe (10) ausgebildet sind.

4. Drosselsteuervorrichtung nach Anspruch 3, wobei die Flossen (18) und die Drosselklappe (10) integral aus Kunstharz hergestellt sind.

5. Drosselsteuervorrichtung nach einem der Ansprüche 2 bis 4, wobei die Flossen (18) sich in eine zu einer Achse der Drosselwelle (3) im Wesentlichen senkrechten Richtung erstrecken und im Wesentlichen parallel zueinander angeordnet sind, so dass sie voneinander in einem vorbestimmten Abstand entfernt sind.

6. Drosselsteuervorrichtung nach Anspruch 5, wobei jede der gleich richtenden Flossen (18) einen durch einen vorstehenden Rand (18a), einen distalen Rand (18b) und einen Übergangsrand (18c) definierten äußeren Rand aufweist, wobei der vorstehende Rand eine lineare, sich im Wesentlichen parallel zu der strömungsaufwärtsseitigen Oberfläche der strömungsabwärtigen Drosselklappenhälfte (14) erstreckende lineare Gestalt hat, der distale Rand (18b) eine kreisförmige Gestalt mit einem Radius um eine Achse (3c) der Drosselwelle (3) hat und kontinuierlich mit einem Umfangsrand der Drosselklappenhälfte (14) verläuft und der Übergangsrand (18c) eine gebogene Gestalt hat und den vorspringenden Rand mit dem distalen Rand gleichmäßig verbindet.

## Revendications

1. Dispositif de commande de papillon comprenant :
un corps de papillon (1) définissant un passage d'admission (1a),
un arbre de papillon (3) supporté en rotation par le corps de papillon et s'étendant en travers du passage d'admission,
une soupape de papillon (10) fixée à l'arbre de papillon et disposée dans le passage d'admission, de sorte que la soupape de papillon ouvre et ferme le passage d'admission alors que l'arbre de papillon tourne, dans lequel la soupape de papillon comporte une moitié de soupape de côté aval (14) et une moitié de soupape de côté amont (15) adaptées pour se déplacer, respectivement, vers un côté aval et vers un côté amont de l'arbre de papillon alors que la soupape de papillon tourne d'une position complètement fermée dans une direction d'ouverture, et
un dispositif de relaxation d'énergie (18) prévu sur une surface de la soupape de papillon (10) afin de relaxer de l'énergie d'un courant d'air d'admission en le divisant en de multiples courants, **caractérisé en ce que**
le dispositif de relaxation d'énergie (18) est prévu seulement sur une surface de côté amont de la moitié de soupape de côté aval (14).

2. Dispositif de commande de papillon selon la revendication 1, dans lequel le dispositif de relaxation d'énergie comprend un dispositif de redressement qui comprend une pluralité d'ailettes (18).

3. Dispositif de commande de papillon selon la revendication 2, dans lequel les ailettes (18) sont formées d'un seul tenant avec la soupape de papillon (10).

4. Dispositif de commande de papillon selon la revendication 3, dans lequel les ailettes (18) et la soupape de papillon (10) sont formées d'un seul tenant en une résine.

5. Dispositif de commande de papillon selon l'une quelconque des revendications 2 à 4, dans lequel les ailettes (18) s'étendent dans une direction sensiblement perpendiculaire à un axe de l'arbre de papillon (3) et sont agencées sensiblement parallèlement les unes aux autres de manière à être espacées les unes des autres d'une distance prédéterminée.

6. Dispositif de commande de papillon selon la revendication 5, dans lequel chacune des ailettes de redressement (18) a un bord extérieur défini par un bord saillant (18a), un bord distal (18b) et un bord de transition (18c), le bord saillant a une forme linéaire s'étendant sensiblement parallèlement à la surface de côté amont de la moitié de soupape de côté aval (14), le bord distal (18b) a une forme circulaire ayant un rayon autour d'un axe (3c) de l'arbre de papillon (3) et est continu avec un bord circonférentiel de la moitié de soupape (14), et le bord de transition (18c) a une forme incurvée et relie graduellement le bord saillant au bord distal.
